# FASCICULE DE BREVET EUROPEEN

(11) **EP 3 041 701 B1**
(45) Date de publication et mention de la délivrance du brevet: **04.10.2017**
(21) Numéro de dépôt: 14755844.9
(22) Date de dépôt: 28.08.2014
(51) Int. Cl.: B60K 17/10, B60K 17/02, F16H 48/12, F16H 48/14, F16H 48/22

(54) **VÉHICULE COMPRENANT UNE TRANSMISSION HYDROSTATIQUE COMPRENANT UN EMBRAYAGE RÉALISANT UNE FONCTION DE DIFFÉRENTIEL**
FAHRZEUG MIT HYDROSTATISCHEM GETRIEBE MIT EINER KUPPLUNG ZUR DURCHFÜHRUNG EINER DIFFERENZIALFUNKTION
VEHICLE COMPRISING A HYDROSTATIC TRANSMISSION COMPRISING A CLUTCH PERFORMING A DIFFERENTIAL FUNCTION

(30) Priorité: 03.09.2013 FR 1358432
(43) Date de publication de la demande: 13.07.2016
(73) Titulaire: Poclain Hydraulics Industrie, 60410 Verberie (FR)
(72) Inventeur: RECOURA, Clément, 60410 Verberie (FR); BOZIC, Ante, 60410 Verberie (FR)
(74) Mandataire: Regimbeau
(86) Numéro de dépôt international: PCT/EP2014/068266
(87) Numéro de publication internationale: WO 2015/032683

(56) Documents cités:
- EP-A2- 1 898 124
- WO-A1-2014/048838
- WO-A1-2014/048842
- GB-A- 2 252 280

## Description

### DOMAINE TECHNIQUE GENERAL

La présente invention concerne les transmissions hydrostatiques pour véhicules, et plus précisément les structures réalisant un différentiel pour une transmission hydrostatique montée sur un véhicule.

### ETAT DE L'ART

Les véhicules comprenant des systèmes de transmission dans lesquels un unique moteur réalise l'entrainement de plusieurs roues comprennent conventionnellement un différentiel, permettant d'entraîner les roues à des vitesses de rotation différentes, ce qui est nécessaire notamment pour permettre au véhicule d'effectuer des virages.

Les structures connues de différentiels sont toutefois encombrantes, ce qui est problématique notamment pour l'intégration de transmissions hydrostatiques sur des véhicules.

De plus, les différentiels standards montés sur des véhicules perdent leur capacité à transmettre un couple en cas de patinage d'une des roues. Pour résoudre ce problème, certains différentiels comprennent une fonction de blocage partiel et/ou complet, pour se verrouiller en fonction d'une différence de vitesse entre les côtés, mais ces différentiels sont encore plus couteux et encombrants.

On connaît par ailleurs les documents GB2252280 qui décrit les caractéristiques du préambule de la revendication 1 et EP1898124 qui décrit un embrayage similaire à celui de la présente invention.

### PRESENTATION DE L'INVENTION

La présente invention vise à remédier à cette problématique.

A cet effet, la présente invention propose un système comprenant d'une machine hydraulique comprenant une partie fixe et une partie tournante pour la réalisation d'une transmission hydrostatique,
la machine comprenant un bloc-cylindres comprenant une pluralité de logements radiaux, une came multilobes entourant le bloc cylindres, et des pistons montés coulissants dans les logements du bloc cylindres, la partie fixe de la machine comprenant la came, et la partie tournante comprenant le bloc-cylindres,
le système comprenant un arbre droit et un arbre gauche indépendants entraînant chacun une roue, caractérisé en ce que ladite machine hydraulique comprend un embrayage lié à sa partie tournante, l'embrayage, l'arbre droit et l'arbre gauche étant adaptés pour coopérer de sorte que ledit embrayage alterne entre
- une configuration de couplage dans laquelle l'arbre gauche et l'arbre droit sont liés en rotation et liés en rotation à la partie tournante de la machine hydraulique,
- une configuration de roue libre dans laquelle l'arbre gauche et l'arbre droit sont libres en rotation l'un par rapport à l'autre, et sont chacun libres en rotation par rapport à la partie tournante de la machine hydraulique.

Selon un mode de réalisation particulier, le bloc cylindres est mobile en translation selon l'axe des arbres, de sorte que l'application d'une pression hydraulique sur ledit bloc cylindres entraine une translation du bloc cylindres contre l'embrayage et la commutation de l'embrayage.

La machine hydraulique comporte typiquement un distributeur adapté pour délivrer une pression hydraulique aux pistons, dans lequel le distributeur est en outre adapté pour appliquer une pression hydraulique sur le bloc cylindres pour entrainer celui-ci en translation, et entrainer une commutation de l'embrayage entre la configuration de roue libre et la configuration de couplage.

En variante, la machine hydraulique comporte un actionneur adapté pour appliquer une pression sur le bloc-cylindres afin d'entraîner celui-ci en translation et entrainer une commutation de l'embrayage entre la configuration de roue libre et la configuration de couplage.

Selon un mode de réalisation,
- l'embrayage comprend un premier ensemble de disques et un second ensemble de disques,
- chacun desdits arbres droit et gauche comprennent un ensemble de disques, respectivement un ensemble de disques gauche et un ensemble de disques droit,
de sorte que,
- en configuration de couplage, le premier ensemble de disques engage l'ensemble de disques gauche et le second ensemble de disques engage l'ensemble de disques droit de manière à lier l'arbre gauche, l'arbre droit et la partie tournante de la machine hydraulique,
- en configuration de roue libre, le premier ensemble de disques et l'ensemble de disques gauche sont désengagés, et le second ensemble de disques et l'ensemble de disques droit sont désengagés, de sorte que l'arbre gauche et l'arbre droit sont libres en rotation l'un par rapport à l'autre, et sont chacun libres en rotation par rapport à la partie tournante de la machine hydraulique.

Le système peut en outre comprendre un élément de rappel élastique adapté pour faire commuter l'embrayage de la configuration de couplage à la configuration de roue libre en l'absence d'une pression hydraulique appliquée sur le bloc cylindres.

Avantageusement, l'embrayage est en outre adapté pour adopter une troisième configuration, dite de couplage avec glissement, dans laquelle l'arbre gauche et l'arbre droite sont couplés en pouvant glisser l'un par rapport à l'autre.

L'embrayage peut être adapté pour commuter entre la configuration de couplage et la configuration de couplage avec glissement en fonction d'une pression hydraulique appliquée sur le bloc-cylindres.

Le système peut en outre comprendre une ligne d'alimentation de la machine hydraulique et une ligne de refoulement, le système comprenant en outre une ligne de dérivation s'étendant entre la ligne d'alimentation et la ligne de refoulement, et une valve de commande adaptée pour sélectivement autoriser ou interdire l'écoulement d'un débit dans la ligne de dérivation, entraînant respectivement la commutation de l'embrayage en position de couplage avec ou sans glissement.

Typiquement, le système comprend en outre un calculateur définissant une valeur seuil de vitesse au-delà de laquelle l'embrayage est basculé dans sa configuration de roue libre de manière à permettre un différentiel de vitesse entre l'arbre droit et l'arbre gauche.

Le système peut en outre comprendre un système de commande de la pression appliqué à la partie tournant de la machine hydraulique pour piloter la configuration de l'embrayage.

Le système de commande peut comprendre au moins l'un parmi le groupe suivant :
- une valve de vidange du circuit hydraulique,
- une pompe de gavage du circuit hydraulique,
- une commande d'une ligne de dérivation du circuit hydraulique.

La machine hydraulique est de manière avantageuse une machine a came fixe et arbre tournant, où le bloc cylindre peut être débrayé de l'axe, et les pistons maintenus en appui dans la came par des ressorts.

L'invention a également pour objet un véhicule comprenant un essieu et un système selon la description qui précède, l'essieu comprenant les arbres droits et gauche, et la machine hydraulique étant montée sur l'essieu.

L'invention a aussi pour objet un procédé de commande d'un système selon la description qui précède, comprenant l'application d'une pression hydraulique à la machine hydraulique pour faire commuter l'embrayage de la machine entre la configuration de roue libre et la configuration de couplage.

Le procédé de commande peut en outre une modulation de la pression hydraulique appliquée à la machine hydraulique pour faire commuter l'embrayage entre une configuration de couplage avec glissement et une configuration de couplage sans glissement.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1a représente un exemple de circuit hydraulique comprenant une machine hydraulique selon un aspect de l'invention
- La figure 1b représente un autre exemple de circuit hydraulique comprenant une machine hydraulique.
- la figure 2a présente un exemple de structure de machine hydraulique selon un aspect de l'invention.
- La figure 2b présente un autre exemple de structure de machine hydraulique.
- La figure 3a représente schématiquement les domaines de pression d'une configuration de couplage avec et sans glissement.
- La figure 3b représente les configurations de l'embrayage en fonction de la pression appliquée à la partie tournante de la machine et du couple transmis.

### DESCRIPTION DETAILLEE

### Circuit hydraulique

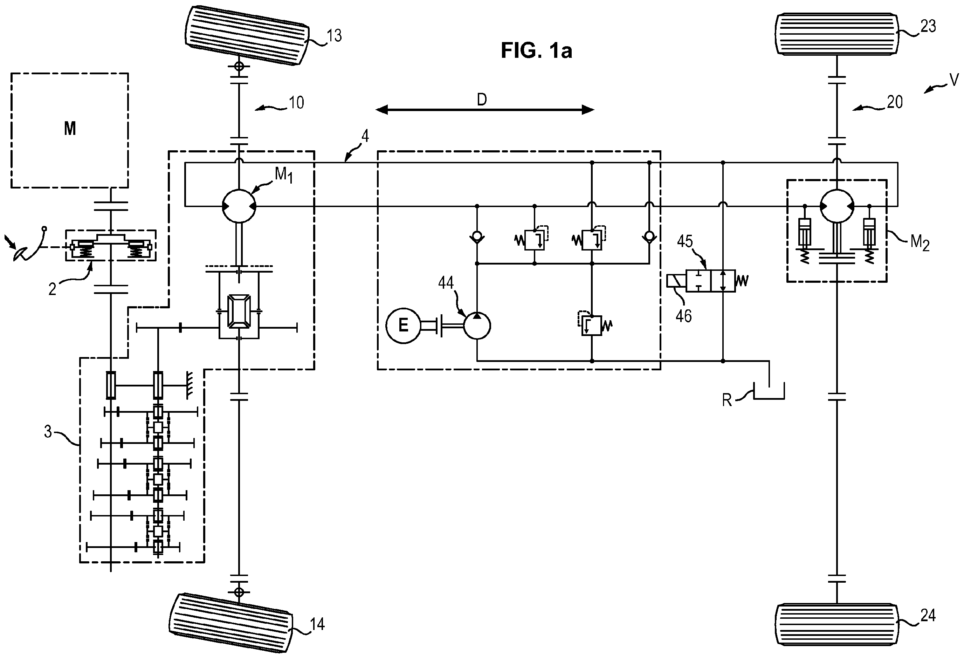

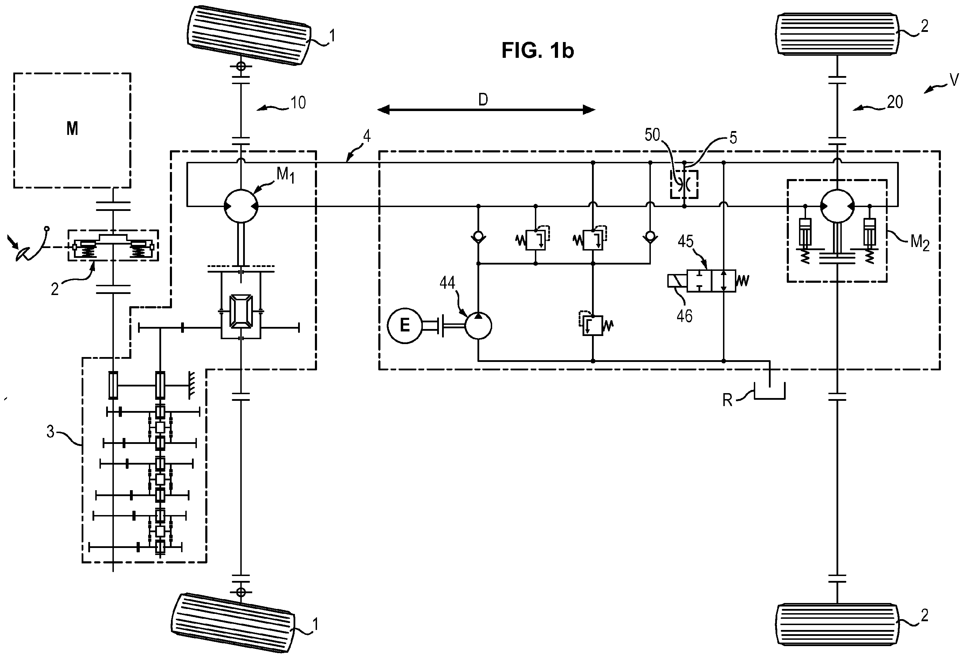

On a représenté sur les figures 1a et 1b un circuit hydraulique d'un véhicule. Le véhicule V est avantageusement, mais non limitativement, un véhicule léger tel qu'une automobile. Le véhicule V comprend un châssis et deux essieux 10, 20, portant chacun deux roues, respectivement 13, 14 et 23, 24. Les deux essieux 10, 20 définissent une direction principale D du châssis du véhicule.

Le véhicule comporte en outre un moteur primaire M, typiquement un moteur thermique, un embrayage 2 et une boîte de vitesse 3, liant le moteur à l'un des essieux pour assurer son entrainement.
Sur les figures 1a et 1b, le moteur primaire entraine l'essieu avant 10, dit essieu menant, l'essieu arrière 20 étant dit essieu mené.

Le véhicule comprend en outre une assistance hydraulique, avantageusement une transmission hydrostatique de puissance depuis l'essieu menant 10 vers l'essieu mené 20. Le véhicule comprend ainsi une première machine hydraulique M1 montée d'une part au châssis et d'autre part à l'essieu menant 10, et une seconde machine hydraulique M2 montée d'une part sur le châssis de d'autre part à l'essieu mené 20.

Les deux machines hydrauliques M1, M2 sont reliées entre elle par des conduits hydrauliques formant un circuit hydraulique 4, et sont adaptées pour fonctionner de manière réversible en tant que pompe, c'est-à-dire en étant adaptées pour prendre du couple et délivrer un débit d'huile, ou en tant que moteur hydraulique, c'est-à-dire qu'elles fournissent un couple en recevant un débit d'huile à un ou plusieurs arbre de sortie, leur fonctionnement dépendant des écarts de vitesse positifs ou négatifs entre les deux machines.
Avantageusement, la machine M1 sur l'essieu menant 10 fonctionne en tant que pompe de manière à générer un débit qui alimente la machine hydraulique M2 qui fonctionne alors en tant que moteur.

Le circuit hydraulique 4 comprend en outre un circuit de gavage 43 des machines hydrauliques M1, M2, le circuit comprenant une pompe de gavage 44, ainsi qu'un réservoir d'huile R, depuis lequel la pompe de gavage 44 prélève l'huile nécessaire pour assurer le gavage du circuit.

Le circuit hydraulique 4 peut encore comprendre une valve de vidange 45 vers le réservoir R, la vidange étant pilotée par une commande 46, par exemple un solénoïde.

### Machine hydraulique

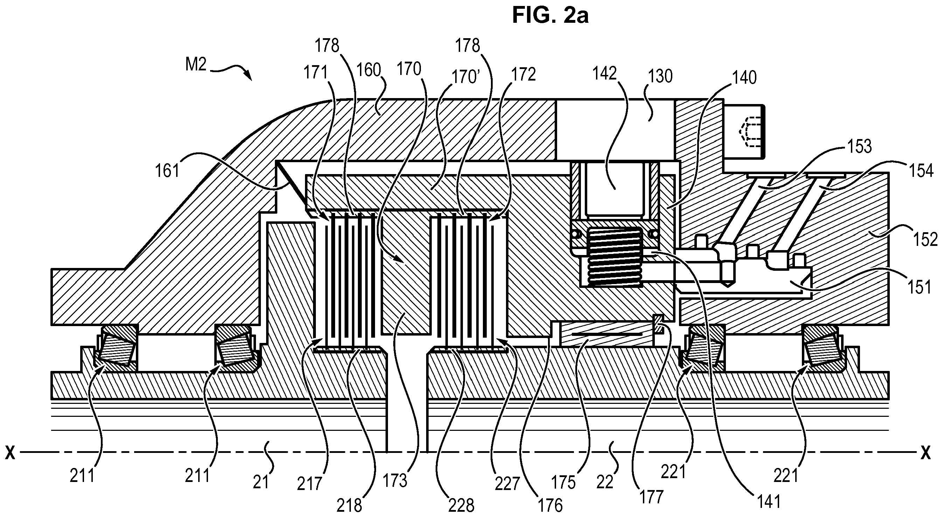

La figure 2a présente une vue partielle en coupe d'un exemple de structure de machine hydraulique M2 selon un aspect de l'invention.

On représente sur cette figure une machine hydraulique M2 comprenant une partie fixe et une partie tournante, de manière à permettre un entraînement en rotation d'un arbre gauche 21 et d'un arbre droit 22.

Chaque arbre 21, 22 entraine chacun typiquement une roue 23, 24 du véhicule, c'est-à-dire que chaque arbre est lié en rotation à une roue d'un véhicule De préférence chaque arbre 21, 22 entraine une roue via un cardan ou un demi-arbre de sortie. Chaque arbre peut donc avantageusement être pourvu de moyens d'entrainement en rotation du demi-arbre qu'il entraine, par exemple des cannelures s'étendant le long de l'axe de l'arbre et s'étendant sur toute la circonférence de l'arbre.

Les moyens d'entrainement en rotation du demi-arbre peuvent être intérieurs ou extérieurs aux arbres, suivant le montage choisi.

Avantageusement, les arbres 21 et 22 sont creux pour alléger la structure. Entre les arbres 21 et 22 sont avantageusement positionnées un système de recentrage et d'appui d'un arbre sur l'autre, par exemple une bague à aiguille et une butée à bille (non représentée) pour permettre aux deux arbres de tourner l'un par rapport à l'autre.

La machine hydraulique présentée comprend un bloc cylindres 140 présentant une pluralité de logements 141 radiaux par rapport à un axe X-X de rotation des arbres gauche 21 et droit 22, des pistons 142 étant montés coulissant dans ces logements 141. Une came 130 multilobes entoure le bloc cylindres, de sorte que les pistons 142 font des mouvements de va et vient dans les logements 141 selon les sommets et les gorges définis par les lobes de la came 130.

De préférence, la machine M2 est à came fixe et arbre tournant, où le bloc cylindre 140 peut être débrayé de l'axe, et les pistons maintenus en appui dans la came par des ressorts.

Le bloc cylindre est concentrique avec l'axe X-X des arbres 21 et 22. Il est également mobile en translation selon cet axe sur une distance courte, permettant l'engagement et le désengagement de l'embrayage décrit ci-après.

La translation du bloc cylindres n'impacte pas le fonctionnement de la machine M2. A cet égard, la came 130 est de préférence suffisamment large pour que la translation du bloc-cylindre ne cause pas de contact entre les pistons 142, d'autres parties du moteur telles que le carter 160 et le couvercle de distributeur 152.

Un ensemble de distribution comprenant un distributeur 151 surmonté d'un couvercle de distributeur 152 permet de réaliser l'alimentation et le refoulement de l'huile, le distributeur 151 mettant en communication successivement les pistons 142 du le bloc cylindres avec les lignes d'alimentation et de refoulement. Un carter 160 délimite avec la came 130 et le couvercle de distributeur 152 le volume interne de la machine hydraulique.
On définit ainsi une partie fixe de la machine hydraulique comprenant le carter 160, la came 130 et le couvercle de distributeur 152, et une partie mobile de la machine hydraulique comprenant le bloc cylindres 140. Le distributeur 151 est lié au couvercle 152 en rotation, mais peut se déplacer axialement.

L'arbre gauche 21 est monté tournant par rapport au carter 160 via des paliers 211. L'arbre droit 22 est monté tournant par rapport au couvercle de distributeur 152 via des paliers 221.

La machine hydraulique M2 comprend en outre un embrayage 170, adapté pour coupler sélectivement la partie tournante de la machine hydraulique M2, en l'occurrence le bloc cylindres 140, à l'arbre gauche 21 et à l'arbre droit 22. Les pistons du bloc cylindre sont équipés de ressorts de poussée pour rester au contact de la came 130 en permanence.

L'embrayage 170 comprend un premier ensemble de disques 171 et un second ensemble de disques 172.

L'arbre gauche 21 comprend un ensemble gauche de disques 217, et l'arbre droit 22 comprend un ensemble droit de disques 227.

Le premier ensemble de disques 171 et l'ensemble gauche de disques 217 sont adaptés pour s'engager par friction afin de lier en rotation l'arbre gauche 21 et la partie tournante de la machine hydraulique M2.

La liaison entre l'embrayage et l'arbre gauche 21 comprend ainsi alternativement un disque 217 lié à l'arbre 21 et un disque 171 lié à la partie tournante de la machine. Lorsqu'ils sont mis en pression, d'une manière connue en soi, chaque disque entraine celui sur lequel il est fixé par friction. Lorsque le premier ensemble de disques 171 et l'ensemble gauche de disques 217 ne sont pas engagés, alors l'arbre gauche 21 est libre en rotation par rapport à la partie tournante de la machine hydraulique 1.

De la même manière, le second ensemble de disques 172 et l'ensemble droit de disques 227 sont adaptés pour s'engager par friction afin de lier en rotation l'arbre droit 22 et la partie tournante de la machine hydraulique M2, la liaison entre l'embrayage et l'arbre droit comprenant alternativement un disque 227 et un disque 171 lié à la partie tournante de la machine. Lorsque le second ensemble de disques 172 et l'ensemble droit de disques 227 ne sont pas engagés, alors l'arbre droit 22 est libre en rotation par rapport à la partie tournante de la machine hydraulique M2.

Au global, l'engagement par friction réalise une liaison entre les trois composants qui sont : l'arbre gauche 21, l'arbre droit 22 et la partie tournante de la machine hydraulique (170, 140).

De préférence, les ensembles de disques destinés à s'engager ensemble comprennent au moins deux disques d'une part et un disque d'autre part, pour que ce dernier puisse être enserré entre les deux disques de la pièce opposée. Ainsi par exemple, pour les ensembles de disques 217 et 171, l'un des ensembles comprend au moins deux disques, et l'autre au moins un disque. La même chose est applicable pour les ensembles de disques 227 et 172.

On comprend que lors de l'engagement des ensembles de disques 217, 227 des arbres 21, 22 avec les ensembles de disques 171, 172 de l'embrayage 170, les distances relatives entre les différents disques diminuent, et en particulier entre les disques appartenant à un même ensemble 217, 227, 171, 172.

Pour permettre ce déplacement relatif des disques d'un même ensemble, chaque disque est de préférence monté coulissant sur l'arbre ou la partie de l'embrayage auquel il est lié.
Avantageusement, les arbres 21, 22 comprennent, sur leurs portions portant les disques 217, 227, des cannelures 218, 228 ou rainures adaptées pour recevoir les disques et pour autoriser une translation des disques le long de l'arbre correspondant.

De même, l'embrayage 170 comprend avantageusement, sur sa surface interne portant les ensembles de disques 171, 172, des cannelures 178 adaptées pour recevoir les disques et autoriser une translation des disques parallèlement à l'axe X-X le long de lequel s'étendent les arbres 21, 22.

Pour entrainer en translation les ensembles de disques 171, 172, l'embrayage 170 est lui-même mobile en translation parallèlement à l'axe X-X, en étant solidaire en translation du bloc cylindres 140. A cet égard, l'embrayage 170 peut être formé d'une seule pièce avec le bloc cylindre ou fixé à celui-ci.

Plus précisément, l'embrayage 170 comprend un support 170' solidaire du bloc cylindre, en étant fixé sur celui-ci ou fait d'une seule pièce avec lui, et une pièce d'engagement 173 présentant une section en T. La pièce d'engagement 173 est montée sur une surface radialement interne du support 170' et porte les ensembles de disques 171, 172 ainsi que les cannelures 178 pour autoriser le coulissement des disques et donc leur rapprochement.

La pièce d'engagement 173 est montée glissante axialement dans le support 170', mais entrainée en rotation par celui-ci. La liaison rotative de la pièce d'engagement 173 par rapport au support 170' est avantageusement réalisée au moyen de cannelures 179 sur les surfaces respectivement interne et externe du support 170' et de la pièce d'engagement 173.

Enfin, pour permettre la translation de l'embrayage 170, 170' quand celui-ci est poussé par le bloc-cylindres, l'embrayage et le bloc cylindre sont montés flottants latéralement sur un palier glissant 175. Le palier glissant 175 est monté entre un épaulement 176 de la surface interne de l'embrayage 170, 170' et une butée 177. D'une manière avantageuse, la butée 177 peut être un anneau élastique placé dans une gorge.

Le déplacement de l'embrayage 170, 170' est limité dans une direction par le serrage des disques (direction de déplacement lorsque l'assistance hydraulique est engagée) et dans la direction opposée par le couvercle du distributeur 152 qui est fixe.

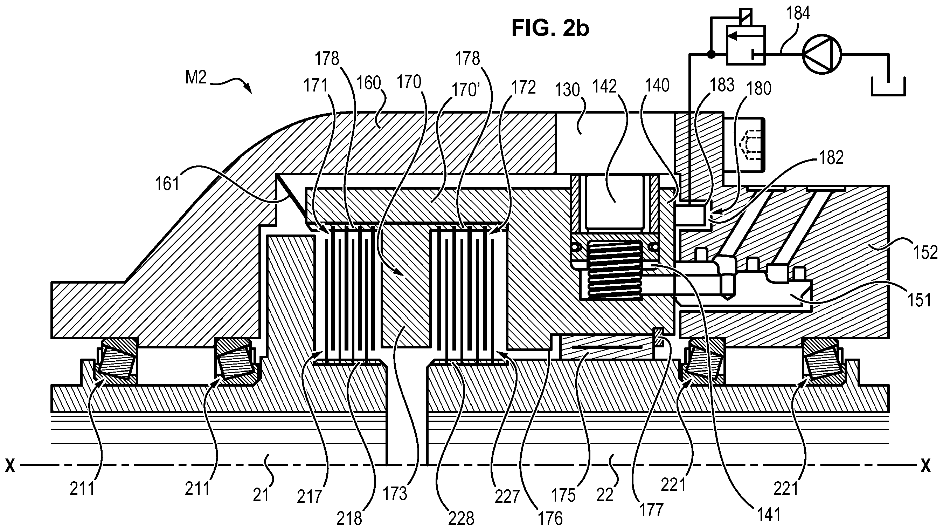

Quel que soit le mode de réalisation, l'embrayage 170, 170' est poussé vers une direction, la gauche sur les figures 2a et 2b, par une poussée hydraulique provenant du distributeur 151 ou d'un actionneur 180 décrit ci-après lorsque l'assistance hydraulique est actionnée.

Il est poussé dans la direction opposée, pour désengager les disques lorsque l'assistance hydraulique est supprimée, et retrouver une configuration de roue libre, par un élément de rappel élastique 161, par exemple une rondelle ressort.

On va maintenance décrire l'entrainement en translation de l'embrayage provoquant l'engagement des disques 171, 172 respectivement avec les disques 217, 227.

Comme indiqué ci-avant, l'engagement des disques est réalisé par une translation du bloc-cylindres 140, entrainant une translation de l'embrayage 170, 170'. Cette translation résulte d'une poussée hydraulique survenant lors de l'actionnement de la commande hydraulique.

Sur la figure 2a, la poussée hydraulique provient du distributeur 151. Le distributeur comporte deux conduits d'alimentation 153, 154, formant une ligne haute pression et une ligne basse-pression, et vice-versa, en fonction de l'utilisation de la machine hydraulique M2.

Avantageusement, le distributeur 151 est du type étagé, c'est-à-dire que chaque gorge (non numérotée) comprend une portée de joint sur un bord sur un plus grand diamètre que sur l'autre bord (le distributeur est globalement conique, et les gorges sont globalement de diamètre croissant). A l'endroit où débouche le conduit d'alimentation, les diamètres des parois situées de part et d'autre du conduit dans la direction de l'axe X-X sont différents. Lorsque le fluide hydraulique présent dans les gorges est mis en pression, il en résulte une poussée différentielle vers le bloc cylindres 140 qui entraine celui-ci en translation et serre les disques ensemble.

D'un manière connue en soi, les distributeurs étagés présentent une résultante des surfaces de poussée au niveau des gorges supérieure à la somme des surface de poussée des conduits d'alimentation au contact du bloc, ce qui garantit toujours un appui suffisant du distributeur sur le bloc pour éviter les fuites d'alimentation.

Sur la figure 2b, la poussée hydraulique peut alternativement être appliquée par un actionneur 180, que le distributeur soit étagé (dans ce cas l'actionneur 180 complète la poussée du distributeur) ou non (cas d'un distributeur cylindrique n'exerçant pas de poussée).

Si le distributeur est du type cylindrique non étagé, qui ne peut fournir de poussée par ses gorges, un organe de poussée supplémentaire est nécessaire.

L'actionneur peut comprendre un ou plusieurs vérins 181, par exemple un vérin comprenant un piston en forme d'anneau s'étendant autour de la chambre du distributeur 151, ou une pluralité de vérins répartis autour du distributeur. Dans tous les cas, chaque vérin 181 comporte une chambre de poussée 182 et un piston mobile 183, dans la chambre, mobile en translation selon l'axe X-X. Un joint (non représenté) est avantageusement prévu pour maintenir la pression dans la chambre.
Le vérin 181 peut alors être mis en pression par une ligne d'alimentation 184 spécifique reliée à la ligne d'alimentation de la machine M2.

L'actionneur peut également être constitué d'un vérin exerçant une poussée sur le distributeur, ou par une chambre supplémentaire exerçant une poussée hydraulique sur le distributeur, ou par une gorge étagée supplémentaire réalisée dans le distributeur, mais reliée à une ligne d'alimentation 184 spécifique reliée à la ligne d'alimentation de la machine M2
L'engagement par friction peut être progressif, proportionnel à l'effort de poussée exercé sur l'embrayage (pour les deux cotés).

### Fonctionnement de la machine

La structure de la machine hydraulique M2 présentée ci-avant permet de définir pour l'embrayage 170 :
- une configuration de couplage dans laquelle le premier ensemble de disques 171 engage l'ensemble de disques gauche 217 et le second ensemble de disques 172 engage l'ensemble de disques droit 227 de manière à lier ensemble l'arbre gauche 21, l'arbre droit 22, et la partie tournante de la machine hydraulique M2,
- une configuration de roue libre dans laquelle le premier ensemble de disques 171 et l'ensemble de disques gauche 217 sont désengagés, et le second ensemble de disques 172 et l'ensemble de disques droit 227 sont désengagés, de sorte que l'arbre gauche 21 et l'arbre droit 22 sont chacun libres en rotation entre eux et par rapport à la partie tournante de la machine hydraulique M2.

En configuration de couplage, l'arbre gauche 21 et l'arbre droit 22 tournent donc à la même vitesse, chacun de ces arbres 21 et 22 étant liés en rotation à la partie tournante de la machine hydraulique 1. Cette configuration n'autorise donc pas de différentiel de vitesse entre l'arbre gauche 21 et l'arbre droit 22, et entre les arbres et la machine

En configuration de roue libre, les deux arbres gauche 21 et droit 22 sont chacun libres en rotation, ce qui autorise donc un différentiel de vitesse entre eux et par rapport à la machine.

Le couplage et découplage de l'embrayage est avantageusement commandé par la valve de vidange 45 du circuit hydraulique :
- lorsque cette valve est passante, la ligne d'alimentation de la machine hydraulique M2 est vidangée et donc aucune pression n'est délivrée au distributeur 151 ou à l'actionneur 180 le cas échéant. L'embrayage est donc en position de découplage.
- Lorsque la valve 45 est commandée pour être en position bloquante, une pression est délivrée au distributeur ou à l'actionneur via la ligne d'alimentation, et donc l'embrayage commute en position de couplage.

Avantageusement, mais facultativement, on peut moduler l'intensité du couplage en fonction de la pression hydraulique appliquée au bloc-cylindres. L'embrayage 170, 170' et les disques peuvent être dimensionnés, et la pression hydraulique appliquée au bloc cylindre peut être pilotée pour permettre un glissement relatif en dessous d'une certaine pression hydraulique appliquée à l'embrayage.

Concernant les disques, pour un dimensionnement des disques choisi, le couple transmissible est modulé par la pression de contact. Par conséquent, en fonction des gammes de pression applicables au bloc cylindres 140, les matériaux des couples de disques alternés (par exemple ensembles de disques 217 et 171 ou 227 et 172) et les diamètres des disques peuvent être adaptés pour moduler le couple transmissible.

Concernant la pression applicable, en référence à la figure 1b, cette pression est avantageusement modulée en positionnant, dans le circuit hydraulique, une valve 5 permettant de limiter la différence de pression entre la ligne d'alimentation et la ligne de refoulement de la machine hydraulique M2.

On a représenté schématiquement sur la figure 1b une manière de limiter la différence de pression par la mise en place d'une ligne de dérivation 5 entre les deux lignes. Cette ligne permet l'écoulement d'un débit entre la ligne d'alimentation et la ligne de refoulement, qui diminue la pression dans la ligne d'alimentation. Avantageusement, le débit entre les deux lignes et limité, par exemple par une restriction 50.

En outre, le circuit comprend avantageusement une valve de commande (non représentée), pouvant autoriser ou non l'écoulement de débit dans la ligne de dérivation. De ce fait le pilotage de la valve de commande permet directement de piloter la configuration des disques : si la valve autorise un débit, la pression est insuffisante pour assurer un couplage sans glissement des disques, ils sont donc couplés avec glissement. En revanche si le débit est interdit, la pression dans la ligne d'alimentation est accrue et les disques s'engagent en couplage sans glissement.

Dans le cas ou la valve de commande est un limiteur de pression proportionnel, par exemple piloté électriquement, on peut directement piloter la pression de contact, et donc l'effort de liaison transmissible par l'embrayage.
Dans le cas où la valve de commande est un limiteur de débit proportionnel, par exemple piloté électriquement, on peut autoriser un certain pourcentage de différence de vitesse entre les essieux ou les roues.

Dans le cas où la pression est appliquée sur le bloc cylindres 140 par un actionneur 180 distinct du distributeur 151, cet actionneur est avantageusement alimenté par une ligne raccordée à la ligne d'alimentation de la machine M2 en aval de la restriction.

Ainsi, dans le cas où l'assistance hydraulique est enclenchée, et où l'écoulement de débit est autorisé entre les deux lignes, la pression transmise au distributeur 151 est diminuée jusqu'à atteindre éventuellement la pression de gavage, et le couple transmis par les disques est diminué. En revanche si l'écoulement de débit est interdit, la pression est maintenue et le couple est plus élevé.

On obtient donc trois modes d'engagement possibles des arbres gauche 21 et droit 22 :
- un premier mode d'engagement sans glissement, qui correspond à la configuration de couplage indiquée ci-avant, dans lequel les arbres gauche et droit sont solidaires en rotation, et tournent donc à la même vitesse. Ce mode assure la transmission de couple la plus élevée depuis l'essieu menant vers l'essieu mené.
- Un deuxième mode d'engagement avec glissement, dans lequel un glissement relatif entre les disques des arbres et les disques de l'embrayage est autorisé. Cet engagement permet la transmission d'un couple inférieur au premier mode, et autorise une différence de vitesse entre les roues entrainées par les deux arbres, ainsi qu'une différence de vitesse entre la machine hydraulique et chacun des deux arbres.
- Un troisième mode de désengagement, correspondant à la configuration de roue libre décrite ci-avant, dans lequel les arbres 21 et 22 sont libres en rotation, et le bloc cylindres est également désengagé des arbres. Ce mode autorise un différentiel de vitesse plus élevé entre les roues mais ne permet pas la transmission de couple.

Ces trois modes d'engagements sont commandés par :
- La valve de vidange 45, pour piloter ou non l'actionnement de l'assistance hydraulique,
- La valve de commande de la ligne de dérivation 5, pour moduler ou non la pression, et
- La pompe de gavage 44, pour moduler la pression de la ligne d'alimentation de la machine lorsque la valve de commande autorise l'écoulement de débit dans la ligne de dérivation.

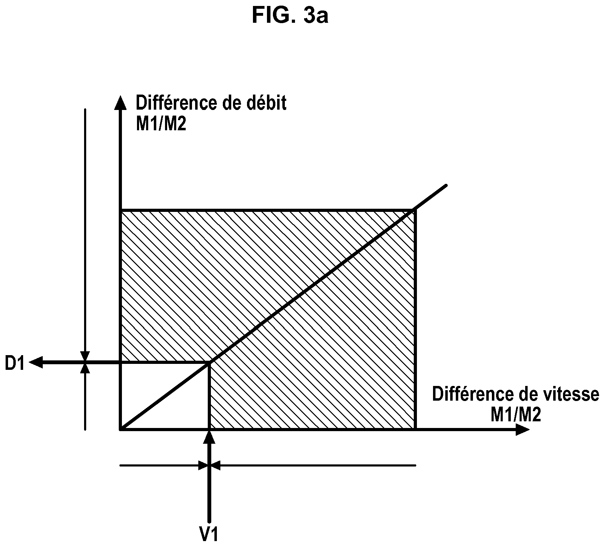

On a représenté sur la figure 3a un exemple de domaines des modes d'engagement avec et sans glissement en fonction de la différence de vitesse entre la machine M1 de l'essieu menant et celle M2 de l'essieu mené. Dans le montage de circuit à deux machines représenté sur les figures 1a et 1b, on remarque que la pression hydraulique dans le circuit 4 est fonction de la différence de vitesse de rotation entre l'essieu 10 et l'essieu 20. Par exemple si l'essieu 10 patine, il y aura un afflux de fluide hydraulique vers l'essieu 20, et la pression d'alimentation de la machine M2 augmentera, ce qui augmentera la pression de contact de l'embrayage, et peut entrainer le changement de mode d'engagement. On note V1 le seuil de différence de vitesse correspondant à la transition entre le mode d'engagement avec glissement et le mode sans glissement.

Pour une différence de vitesse inférieure à V1 (zone blanche), les disques sont engagés avec frottement. Pour une vitesse supérieure (zone grise), ils sont engagés sans glissement.
Selon un exemple avantageux, les disques sont dimensionnés pour permettre un engagement avec glissement jusqu'à une pression de 10 bars, correspondant à une pression de gavage dans le circuit (cette pression correspondant à une différence de vitesse limite entre les machines). Au-delà de cette pression, les disques sont engagés sans glissement. L'engagement avec glissement peut être proportionnel et progressif en fonction de la pression, jusqu'à la limite de pression ou il n'y a plus de glissement, c'est-à-dire que l'embrayage peut transmettre l'intégralité du couple maximal s'exerçant sur le roues pendant l'utilisation du véhicule

Avantageusement, mais facultativement, l'embrayage 170 peut en outre être dimensionné pour ne transmettre le couple que jusqu'à une certaine limite pour la pression de contact la plus élevée, ce qui a une fonction de limiteur de couple pour protéger le véhicule des pics de couple qui pourraient l'endommager.

Normalement, le couple transmis hydrauliquement est limité par les valves de surpression présentes sur les lignes du circuit hydraulique de transmission. Cependant, en cas de pic de couple exagéré transmis sur une roue, ou de blocage mécanique d'un composant, il est utile de prévoir une limitation mécanique au couple transmis par les arbres.

A cet égard, le diamètre, le nombre des disques, et les couples de matériaux ente les disques de l'arbre gauche 21 et ceux de l'embrayage d'une part, et entre les disques de l'arbre droit 22 et ceux de l'embrayage d'autre part, sont avantageusement choisis pour permettre un glissement relatif des disques au-delà d'un certain couple.

Cette configuration a l'avantage de pouvoir diminuer le dimensionnement des moyens d'entrainement vers les roues, cannelures, cardans, etc., et de les alléger, pour une utilisation accessoire et temporaire.

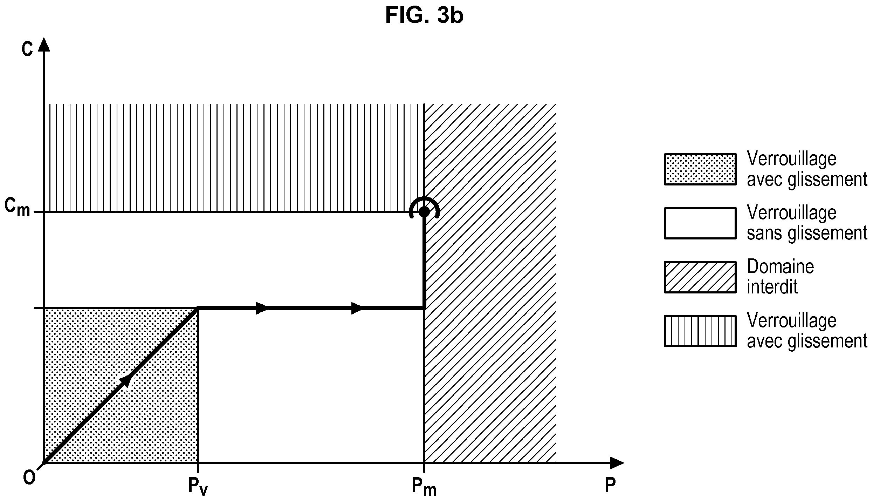

En référence à la figure 3b, on a représenté un autre diagramme des modes de fonctionnement de la machine hydraulique, ayant cette fois en abscisse la pression hydraulique appliquée au bloc-cylindres et en ordonnée le couple transmis par l'embrayage.

On a représenté :
- En pointillés, la zone de verrouillage avec glissement en-deçà d'une pression hydraulique Pᵥ de verrouillage,
- Sans figuré, la zone de verrouillage sans glissement pour une pression hydraulique appliquée au bloc-cylindres supérieure à la pression Pᵥ,
- En traits obliques, un domaine interdit correspondant à une pression supérieure à la pression maximale Pₘ autorisée par les valves de surpression du circuit hydraulique, et
- En traits verticaux, on a représenté la zone de verrouillage avec glissement au-delà du couple maximal Cₘ transmissible par l'embrayage.

On a représenté par la flèche un exemple d'évolution de la pression et du couple transmis, sur un véhicule, depuis l'arrêt ou la mise en route de l'assistance hydraulique, jusqu'au couple maximum admissible Cₘ.

Un tel système est notamment avantageux pour la réalisation d'une assistance hydraulique sur un véhicule, par exemple un véhicule à deux roues motrices ayant un unique essieu menant, et pour lequel l'assistance hydraulique permet ainsi de passer à quatre roues motrices. Une telle assistance hydraulique est utilisée essentiellement pour le franchissement d'obstacles ou en cas de conditions difficiles (neige ou verglas par exemple), c'est-à-dire pour des vitesses de déplacement faibles. Or, pour de telles vitesses et sur terrain glissant, il est acceptable de ne pas permettre de différentiel de vitesse entre l'arbre gauche 21 et l'arbre droit 22.

Lorsque l'assistance hydraulique est désengagée, c'est-à-dire habituellement lorsque le véhicule se déplace sur route et/ou à vitesse élevée, l'embrayage 170 est en configuration de roue libre et autorise donc un différentiel de vitesse entre l'arbre gauche 21 et l'arbre droit 22.

Afin d'assurer une fonction de différentiel lorsque le véhicule se déplace à vitesse élevée, le véhicule peut être équipé d'un calculateur définissant une valeur seuil de vitesse, au-delà de laquelle l'embrayage 170 est basculé dans sa configuration de roue libre.

Le système présenté permet ainsi de réaliser une transmission hydrostatique sur un véhicule dans le cadre d'une assistance hydraulique, tout en s'affranchissant de la nécessité d'un différentiel ayant une structure conventionnelle. Le système présenté est ainsi avantageux en termes d'encombrement.

En particulier, le mode de réalisation du système permettant un couplage progressif peut remplir les fonctions d'un différentiel autobloquant ou a glissement limité, en réalisant non seulement une liaison progressive roue gauche/roue droite, mais également une liaison progressive essieu avant/essieu arrière.

Contrairement à un différentiel mécanique, l'invention permet aussi un patinage avant/arrière, c'est-à-dire que la somme des vitesses de rotation des roues de l'essieu mené n'est pas forcément égale à une constante de la vitesse de rotation de l'essieu menant, lorsque les embrayages sont en situation de glissement.

Le système proposé est en outre particulièrement avantageux pour les transmissions hydrostatiques utilisant des machines hydrauliques à pistons radiaux et came multilobes tournant à la vitesse des roues. De telles machines hydrauliques, qui sont bien connues de l'homme du métier, fonctionnent en effet à des vitesses de rotation peu élevées, ce qui est bien en ligne avec le système présenté qui est adapté pour une assistance hydraulique à vitesse faible.

## Revendications

1. Système comprenant d'une machine hydraulique (M2) comprenant une partie fixe et une partie tournante pour la réalisation d'une transmission hydrostatique,
la machine comprenant un bloc-cylindres (140) comprenant une pluralité de logements radiaux (141), une came multilobes (130) entourant le bloc cylindres, et des pistons (142) montés coulissants dans les logements (141) du bloc cylindres (140), la partie fixe de la machine comprenant la came (130), et la partie tournante comprenant le bloc-cylindres (140),
le système comprenant un arbre droit (22) et un arbre gauche (21) indépendants entraînant chacun une roue, **caractérisé en ce que** ladite machine hydraulique (M2) comprend un embrayage (170) lié à sa partie tournante, l'embrayage (170), l'arbre droit (22) et l'arbre gauche (21) étant adaptés pour coopérer de sorte que ledit embrayage alterne entre
- une configuration de couplage dans laquelle l'arbre gauche (21) et l'arbre droit (22) sont liés en rotation et liés en rotation à la partie tournante de la machine hydraulique (M2),
- une configuration de roue libre dans laquelle l'arbre gauche (21) et l'arbre droit (22) sont libres en rotation l'un par rapport à l'autre, et sont chacun libres en rotation par rapport à la partie tournante de la machine hydraulique (M2).

2. Système selon la revendication 1, dans lequel le bloc cylindres (140) est mobile en translation selon l'axe des arbres (21, 22), de sorte que l'application d'une pression hydraulique sur ledit bloc cylindres entraine une translation du bloc cylindres (140) contre l'embrayage et la commutation de l'embrayage (170).

3. Système selon la revendication 2, dans lequel la machine hydraulique comporte en outre un distributeur (151) adapté pour délivrer une pression hydraulique aux pistons (142), dans lequel le distributeur (151) est en outre adapté pour appliquer une pression hydraulique sur le bloc cylindres (140) pour entrainer celui-ci en translation, et entrainer une commutation de l'embrayage (170) entre la configuration de roue libre et la configuration de couplage.

4. Système selon la revendication 2, dans lequel la machine hydraulique (M2) comporte en outre un actionneur (180) adapté pour appliquer une pression sur le bloc-cylindres (140) afin d'entraîner celui-ci en translation et entrainer une commutation de l'embrayage (170) entre la configuration de roue libre et la configuration de couplage.

5. Système selon l'une des revendications 1 à 4, dans lequel
- l'embrayage (170) comprend un premier ensemble de disques (171) et un second ensemble de disques (172),
- chacun desdits arbres droit (22) et gauche (21) comprennent un ensemble de disques, respectivement un ensemble de disques gauche (217) et un ensemble de disques droit (227),
de sorte que,
- en configuration de couplage, le premier ensemble de disques (71) engage l'ensemble de disques gauche (217) et le second ensemble de disques (72) engage l'ensemble de disques droit (227) de manière à lier l'arbre gauche (21),l'arbre droit (22) et la partie tournante de la machine hydraulique (M2),
- en configuration de roue libre, le premier ensemble de disques (71) et l'ensemble de disques gauche (217) sont désengagés, et le second ensemble de disques (72) et l'ensemble de disques droit (227) sont désengagés, de sorte que l'arbre gauche (21) et l'arbre droit (22) sont libres en rotation l'un par rapport à l'autre, et sont chacun libres en rotation par rapport à la partie tournante de la machine hydraulique (M2).

6. Système selon l'une des revendications 1 à 5, comprenant en outre un élément de rappel élastique (161) adapté pour faire commuter l'embrayage (170) de la configuration de couplage à la configuration de roue libre en l'absence d'une pression hydraulique appliquée sur le bloc cylindres (140).

7. Système selon l'une des revendications 1 à 6, dans lequel l'embrayage (170) est en outre adapté pour adopter une troisième configuration, dite de couplage avec glissement, dans laquelle l'arbre gauche (21) et l'arbre droite (22) sont couplés en pouvant glisser l'un par rapport à l'autre.

8. Système selon la revendication 7, dans lequel l'embrayage (170) est adapté pour commuter entre la configuration de couplage et la configuration de couplage avec glissement en fonction d'une pression hydraulique appliquée sur le bloc-cylindres (130).

9. Système selon l'une des revendications 7 ou 8, comprenant en outre une ligne d'alimentation de la machine hydraulique (M2) et une ligne de refoulement, le véhicule comprenant en outre une ligne de dérivation (5) s'étendant entre la ligne d'alimentation et la ligne de refoulement, et une valve de commande adaptée pour sélectivement autoriser ou interdire l'écoulement d'un débit dans la ligne de dérivation, entrainant respectivement la commutation de l'embrayage (170) en position de couplage avec ou sans glissement.

10. Système selon l'une des revendications 1 à 9, comprenant en outre un calculateur définissant une valeur seuil de vitesse au-delà de laquelle l'embrayage (170) est basculé dans sa configuration de roue libre de manière à permettre un différentiel de vitesse entre l'arbre droit (22) et l'arbre gauche (21).

11. Système selon l'une des revendications précédentes, comprenant en outre un système de commande (45, 44) de la pression appliqué à la partie tournant de la machine hydraulique (M2) pour piloter la configuration de l'embrayage (170).

12. Système selon la revendication 11, dans lequel le système de commande comprend au moins l'un parmi le groupe suivant :
- une valve de vidange (45) du circuit hydraulique,
- une pompe de gavage (44) du circuit hydraulique,
- une commande d'une ligne de dérivation (5) du circuit hydraulique.

13. Véhicule comprenant un essieu et un système selon l'une des revendications précédentes, l'essieu comprenant les arbres droits (22) et gauche (21), et la machine hydraulique (M2) étant montée sur l'essieu.

14. Procédé de commande d'un système selon l'une des revendications 1 à 12, comprenant l'application d'une pression hydraulique à la machine hydraulique (M2) pour faire commuter l'embrayage (170) de la machine entre la configuration de roue libre et la configuration de couplage.

15. Procédé de commande d'un système selon la revendication 14, comprenant en outre une modulation de la pression hydraulique appliquée à la machine hydraulique (M2) pour faire commuter l'embrayage (170) entre une configuration de couplage avec glissement et une configuration de couplage sans glissement.

## Patentansprüche

1. System, das eine hydraulische Maschine (M2) umfasst, die einen feststehenden Teil und einen drehenden Teil für die Bildung eines hydrostatischen Gebildes umfasst,
wobei die Maschine einen Zylinderblock (140) umfasst, der eine Mehrzahl von radialen Aufnahmen (141) umfasst, einen multilobalen Nocken (130), der den Zylinderblock umgreift, und Kolben (142), die gleitend in den Aufnahmen (141) des Zylinderblocks (140) montiert sind, wobei der feststehende Teil der Maschine den Nocken (130) umfasst, und der drehende Teil den Zylinderblock (140) umfasst,
wobei das System eine unabhängige rechte Welle (22) und eine linke Welle (21) umfasst, die jeweils ein Rad antreiben, **dadurch gekennzeichnet, dass** die hydraulische Maschine (M2) eine Kupplung (170) umfasst, die mit ihrem drehenden Teil verbunden ist, und die Kupplung (170), die rechte Welle (22) und die linke Welle (21) so ausgelegt sind, dass sie zusammenwirken, so dass die Kupplung
- zwischen einer Kopplungskonfiguration, in der die linke Welle (21) und die rechte Welle (22) drehbar verbunden sind und drehbar mit dem drehenden Teil der hydraulischen Maschine (M2) verbunden sind,
- und einer Freilaufkonfiguration wechselt, in der die linke Welle (21) und die rechte Welle (22) jeweils frei drehen und jede in freier Drehung gegenüber dem drehenden Teil der hydraulischen Maschine (M2) ist.

2. System nach Anspruch 1, wobei der Zylinderblock (140) nach der Achse der Wellen (21, 22) translationsbeweglich ist, so dass das Aufbringen eines Hydraulikdrucks auf den Zylinderblock eine Translation des Zylinderblocks (140) gegen die Kupplung und die Schaltung der Kupplung (170) mit sich führt.

3. System nach Anspruch 2, wobei die hydraulische Maschine ferner einen Verteiler (151) umfasst, der angepasst ist, einen Hydraulikdruck an die Kolben (142) abzugeben, in dem der Verteiler (151) außerdem angepasst ist, einen Hydraulikdruck auf den Zylinderblock (140) aufzubringen, um diesen in Translation zu versetzen und eine Schaltung der Kupplung (170) zwischen der Freilaufkonfiguration und der Kopplungskonfiguration anzutreiben.

4. System nach Anspruch 2, wobei die hydraulische Maschine (M2) ferner ein Betätigungselement (180) umfasst, das angepasst ist, einen Druck auf den Zylinderblock (140) aufzubringen, um diesen in Translation zu versetzen und eine Schaltung der Kupplung (170) zwischen der Freilaufkonfiguration und der Kopplungskonfiguration anzutreiben.

5. System nach einem beliebigen der vorstehenden Ansprüche 1 bis 4, wobei:
- die Kupplung (170) eine erste Scheibenanordnung (171) und eine zweite Scheibenanordnung (172) umfasst,
- jede der rechten Welle (22) und der linken Welle (21) eine Scheibenanordnung umfasst beziehungsweise eine linke Scheibenanordnung (217) und eine rechte Scheibenanordnung (227), so dass
- in der Kopplungskonfiguration die erste Scheibenanordnung (71) in die linke Scheibenanordnung (217) eingreift, und die zweite Scheibenanordnung (72) in die rechte Scheibenanordnung (227) eingreift, so dass die linke Welle (21), die rechte Welle (22) und der drehende Teil der hydraulischen Maschine (M2) verbunden werden,
- in der Freilaufkonfiguration die erste Scheibenanordnung (71) und die linke Scheibenanordnung (217) gelöst sind, und die zweite Scheibenanordnung (72) und die rechte Scheibenanordnung (227) gelöst sind, so dass die linke Welle (21) und die rechte Welle (22) jeweils frei drehen und jede in freier Drehung gegenüber dem drehenden Teil der hydraulischen Maschine (M2) ist.

6. System nach einem beliebigen der vorstehenden Ansprüche 1 bis 5, das ferner ein elastisches Rückstellelement (161) umfasst, das angepasst ist, bei fehlendem auf den Zylinderblock (140) aufgebrachtem hydraulischem Druck die Kupplung (170) von der Kopplungskonfiguration zur Freilaufkonfiguration schalten zu lassen.

7. System nach einem beliebigen der vorstehenden Ansprüche 1 bis 6, wobei die Kupplung (170) ferner angepasst ist, eine dritte Konfiguration anzunehmen, die Rutschkupplung genannt wird, wobei die linke Welle (21) und die rechte Welle (22) gekoppelt sind und gleichzeitig gegeneinander rutschen können.

8. System nach Anspruch 7, wobei die Kupplung (170) angepasst ist, zwischen der Kopplungskonfiguration und der Konfiguration mit Rutschkupplung in Abhängigkeit eines auf den Zylinderblock (130) aufgebrachten Drucks zu schalten.

9. System nach einem beliebigen der vorstehenden Ansprüche 7 oder 8, das ferner eine Versorgungsleitung der hydraulischen Maschine (M2) und eine Druckleitung umfasst, wobei das Fahrzeug ferner eine Umgehungsleitung (5) umfasst, die sich zwischen der Versorgungsleitung und der Druckleitung erstreckt, und ein Steuerventil, das angepasst ist, um die Strömung eines Durchsatzes in der Umgehungsleitung selektiv zuzulassen oder zu untersagen, was die Schaltung der Kupplung (170) in Koppelposition mit oder ohne Rutschen mit sich führt.

10. System nach einem beliebigen der vorstehenden Ansprüche 1 bis 9, das ferner einen Rechner umfasst, der einen Drehzahlschwellenwert definiert, über den hinaus die Kupplung (170) in ihre Freilaufkonfiguration umgeschaltet wird, damit ein Drehzahldifferenzial zwischen der rechten Welle (22) und der linken Welle (21) möglich wird.

11. System nach einem beliebigen der vorstehenden Ansprüche, das ferner ein Steuersystem (45, 44) für den Druck umfasst, der auf den drehenden Teil der hydraulischen Maschine (M2) aufgebracht wird, um die Konfiguration der Kupplung (170) zu steuern.

12. Systems nach Anspruch 11, wobei das Steuersystem zumindest eines unter der folgenden Gruppe umfasst:
- ein Entlüftungsventil (45) des Hydraulikkreislaufs,
- eine Speisepumpe (44) des Hydraulikkreislaufs,
- eine Steuerung einer Umgehungsleitung (5) des Hydraulikkreislaufs.

13. Fahrzeug, das eine Achse und ein System nach einem beliebigen der vorstehenden Ansprüche umfasst, wobei die Achse die rechte (22) und die linke Welle (21) umfasst, und die hydraulische Maschine (M2) auf der Achse montiert ist.

14. Verfahren zur Steuerung eines Systems nach einem beliebigen der vorstehenden Ansprüche 1 bis 12, das das Aufbringen eines hydraulischen Drucks auf die hydraulische Maschine (M2) umfasst, um die Kupplung (170) der Maschine zum Schalten zwischen der Freilaufkonfiguration und der Kopplungskonfiguration zu veranlassen.

15. Verfahren zur Steuerung eines Systems nach Anspruch 14, das ferner eine Modulation des hydraulischen Drucks umfasst, der auf die hydraulische Maschine (M2) aufgebracht wird, um die Kupplung (170) zum Schalten zwischen einer Kopplungskonfiguration mit Rutschen und einer Kopplungskonfiguration ohne Rutschen zu veranlassen.

## Claims

1. A system comprising a hydraulic machine (M2) comprising a fixed portion and a rotating portion for making a hydrostatic transmission,
the machine comprising a cylinder block (140) comprising a plurality of radial housings (141), a multilobe cam (130) surrounding the cylinder block, and pistons (142) slidably mounted in the housings (141) of the cylinder block (140), the fixed portion of the machine comprising the cam (130), and the rotating portion comprising the cylinder block (140),
the system comprising a right shaft (22) and a left shaft (21) which are independent, each driving a wheel, **characterized in that** said hydraulic machine (M2) comprises a clutch (170) related to its rotating portion, the clutch (170), the right shaft (22) and the left shaft (21) being adapted for cooperating so that said clutch alternates between
- a coupling configuration in which the left shaft (21) and the right shaft (22) are connected in rotation and connected in rotation to the rotating portion of the hydraulic machine (M2),
- a free wheel configuration in which the left shaft (21) and the right shaft (22) are free to rotate relatively to each other, and are each free in rotation relatively to the rotating portion of the hydraulic machine (M2).

2. The system according to claim 1, wherein the cylinder block (140) is movable in translation along the axis of the shafts (21, 22) so that the application of a hydraulic pressure on said cylinder block causes a translation of the cylinder block (140) against the clutch and the switching of the clutch (170).

3. The system according to claim 2, wherein the hydraulic machine further includes a distributor (151) adapted for delivering a hydraulic pressure to the pistons (142), wherein the distributor (151) is further adapted for applying a hydraulic pressure on the cylinder block (140) for causing translation of the latter, and driving a switching of the clutch (170) between the free wheel configuration and the coupling configuration.

4. The system according to claim 2, wherein the hydraulic machine (M2) further includes an actuator (180) adapted for applying pressure on the cylinder block (140) in order to cause translation of the latter and cause switching of the clutch (170) between the free wheel configuration and the coupling configuration.

5. The system according to one of claims 1 to 4, wherein
- the clutch (170) comprises a first set of discs (171) and a second set of discs (172),
- each of said right (22) and left (21) shafts comprise a set of discs, respectively a set of left discs (217) and a set of right discs (227), so that,
- in the coupling configuration, the first set of discs (71) engages the set of left discs (217) and the second set of discs (72) engages the whole of right discs (227) so as to connect the left shaft (21), the right shaft (22) and the rotating portion of the hydraulic machine (M2),
- in the free wheel configuration, the first set of discs (71) and the set of left discs (217) are disengaged, and the second set of discs (72) and the set of right discs (227) are disengaged, so that the left shaft (21) and the right shaft (22) are free to rotate relatively to each other, and are each free in rotation relatively to the rotating portion of the hydraulic machine (M2).

6. The system according to one of claims 1 to 5, further comprising an elastic return element (161) adapted for switching the clutch (170) of the coupling configuration to the free wheel configuration in the absence of a hydraulic pressure applied on the cylinder block (140).

7. The system according to one of claims 1 to 6, wherein the clutch (170) is further adapted for adopting a third configuration, a so-called coupling configuration with sliding, wherein the left shaft (21) and the right shaft (22) are coupled while being able to slide relatively to each other.

8. The system according to claim 7, wherein the clutch (170) is adapted for switching between the coupling configuration and the coupling configuration with sliding according to a hydraulic pressure applied on the cylinder block (130).

9. The system according to one of claims 7 or 8, further comprising a line for powering the hydraulic machine (M2) and a discharge line, the vehicle further comprising a bypass line (5) extending between the supply line and the discharge line, and a control valve adapted for selectively authorizing or preventing the flow of a flow rate in the bypass line, respectively causing the switching of the clutch (170) into the coupling position with or without sliding.

10. The system according to one of claims 1 to 9, further comprising a computer defining a threshold speed value beyond which the clutch (170) is switched into its free wheel configuration so as to allow a speed differential between the right shaft (22) and the left shaft (21).

11. The system according to one of the preceding claims, further comprising a control system (45, 44) for the pressure applied to the rotating portion of the hydraulic machine (M2) for controlling the configuration of the clutch (170).

12. The system according to claim 11, wherein the control system comprises at least one from among the following group:
- a valve (45) for emptying the hydraulic circuit,
- a booster pump (44) of the hydraulic circuit,
- a control of a bypass line (5) of the hydraulic circuit.

13. A vehicle comprising an axle and a system according to one of the preceding claims, the axle comprising the right (22) and left (21) shafts, and the hydraulic machine (M2) being mounted on the axle.

14. A method for controlling a system according to one of claims 1 to 12, comprising the application of a hydraulic pressure to the hydraulic machine (M2) for causing switching of the clutch (170) of the machine between the free wheel configuration and the coupling configuration.

15. A method for controlling a system according to claim 14, further comprising a modulation of the hydraulic pressure applied to the hydraulic machine (M2) for causing switching of the clutch (170) between a coupling configuration with sliding and a coupling configuration without sliding.
